# EUROPÄISCHE PATENTSCHRIFT

(11) **EP 2 473 335 B1**
(45) Veröffentlichungstag und Bekanntmachung des Hinweises auf die Patenterteilung: **06.11.2013**
(21) Anmeldenummer: 10750038.1
(22) Anmeldetag: 17.08.2010
(51) Int. Cl.: B29C 70/38, B29C 67/00

(54) **VERFAHREN ZUM HERSTELLEN EINES DREIDIMENSIONALEN OBJEKTES IM WEGE EINES GENERATIVEN HERSTELLUNGSPROZESSES NACH DEM LOM-VERFAHREN**
METHOD FOR PRODUCING A THREE-DIMENSIONAL OBJECT IN THE COURSE OF A GENERATIVE PRODUCTION PROCESS BASED ON THE LOM METHOD
PROCÉDÉ DE PRODUCTION D'UN OBJET TRI-DIMENSIONNEL AU COURS D'UN PROCÉDÉ DE PRODUCTION GÉNÉRATIF SELON LE PROCÉDÉ DE FABRICATION STRATIFIÉE D'OBJET - LOM -

(30) Priorität: 01.09.2009 DE 102009039578
(43) Veröffentlichungstag der Anmeldung: 11.07.2012
(73) Patentinhaber: Fraunhofer-Gesellschaft zur Förderung der angewandten Forschung e.V., 80686 München (DE)
(72) Erfinder: GRZESIAK, Andrzej, 70569 Stuttgart (DE); BECKER, Ralf, 71672 Marbach (DE); REFLE, Oliver, 72768 Reutlingen (DE)
(74) Vertreter: Rösler, Uwe
(86) Internationale Anmeldenummer: PCT/EP2010/005052
(87) Internationale Veröffentlichungsnummer: WO 2011/026563

(56) Entgegenhaltungen:
- EP-A1- 0 448 459
- EP-A2- 0 846 549
- WO-A2-01/76863
- GB-A- 2 311 960

## Beschreibung

### Technisches Gebiet

Die Erfindung bezieht sich auf ein Verfahren zum Herstellen eines dreidimensionalen Objektes im Wege eines generativen Herstellungsprozesses nach dem LOM-Verfahren (Laminated Object Manufacturing), bei dem das Objekt durch wiederholtes, lagenweises flächiges Übereinanderfügen einer Vielzahl einzelner Flächenmaterialabschnitte in Form eines sich dabei ausbildenden, dreidimensionalen Schichtverbundstapels erhalten wird.

Unter der Bezeichnung "Laminated Object Modeling", kurz LOM-Verfahren ist ein generatives Fertigungsverfahren zu verstehen, mit dem ein Objekt schichtweise aus einem Flächenmaterial, vorzugsweise Papier oder Kunststofffolie, aufgebaut wird. Auf einer vertikal absenkbaren Bauplattform werden in vielfach wiederholender Weise einzelne Flächenmaterialabschnitte, beispielsweise in Form einzelner Papierblätter, abgelegt, wobei jeder einzelne Flächenmaterialabschnitt entsprechend einer jeweiligen Querschnittsform des herzustellenden Objektes zugeschnitten wird, die sich von einer Schichtlage zur anderen Schichtlage ändern kann. Der Zuschnitt erfolgt mit Hilfe einer Schneidvorrichtung, beispielsweise mittels einer Laser-, Wasserstrahl- oder Heißdraht-Anordnung, wobei der Zuschnitt vor oder nach dem Ablegen auf der Bauplattform bzw. auf dem sich auf der Bauplattform schichtweise ausbildenden Schichtverbundstapel erfolgt. Zur Gewährleistung eines festen Zusammenhaltes zwischen den einzelnen Schichtlagen wird vor oder nach dem Ablegevorgang wenigstens eine Oberfläche eines stets neu abzulegenden Flächenmaterialabschnittes mit einem selbst härtenden Bindemittel, vorzugsweise ein EP-Harz, versehen, das infolge einer nachfolgenden Wärmeexposition zumeist unter zusätzlicher Druckeinwirkung auf den im Stapel zu oberst aufgebrachten Flächenmaterialabschnittes aushärtet.

Neben den bereits erwähnten typischerweise aus Papier oder Kunststoff bestehenden Schichtmaterialien, die zur Durchführung des LOM-Verfahrens in Rollenform als Meterware bevorratet werden, können auch Flachblechmaterialien für den Aufbau eines derartigen Schichtverbundstapels eingesetzt werden, zu deren jeweiligen Zuschnitt die Bleche durchtrennende Laserstrahlquellen einzusetzen sind. In US 2007/0134467 A1 und DE 101 577 57 A1 sind LOM-Verfahren offenbart, bei denen die einzelnen Schichten aus Materialien bestehen, die unverwebte Fasern enthalten. Die WO 01/76863 A2 beschreibt ein LOM-Verfahren, bei dem einzelne Verbundmaterialschichten zu einem Stapelverbund gefügt werden, gemäß dem Oberbegriff des Anspruchs 1.

### Stand der Technik

Zur Herstellung so genannter Leichtbaustrukturen, wie sie vielfach in der Luftfahrzeugindustrie und in einer beliebigen Vielzahl weiterer technischer Anwendungsbereiche zum Einsatz kommen, werden häufig faserverstärkte Verbundwerkstoffe unter Verwendung von Glas- oder Karbon-Fasem eingesetzt. Eine steigende Nachfrage nach derartigen Leichtbaustrukturen machen industrielle Herstellungsverfahren erforderlich, mit denen derartige hocheffiziente Bauteile, auch als sogenannte Komposit-Leichtbauteile bezeichnet, d.h. Bauteile, die aus verschiedenen Werkstoffkomponenten zusammengesetzt sind und sich durch ihre hohe Steifigkeit, Belastbarkeit und ihr geringes Eigengewichtes auszeichnen, realisierbar sind. Ein breiter Einsatz derartiger Komposit-Leichtbaustrukturen bspw. im Fahrzeugbau aber auch in vielen anderen Industriezweigen erfordert zudem automatisierte Herstellungsverfahren im industriellen Maßstab, denen jedoch fertigungstechnische Grenzen gesetzt sind. Mit den bisher bekannten industriellen Verfahren zur Herstellung bspw. von Kohlefaser-Verbundbauteilen ist es lediglich möglich mehrlagige Schalenkonstruktion zu realisieren. Bereits die Fertigung so genannter dreidimensional gewebter Werkstücke ist fertigungstechnisch sehr aufwendig, kostspielig und nur bedingt automatisierbar. So sind bis dato keine industriell einsetzbaren Fertigungstechnologien verfügbar, die es erlauben, dreidimensionale Objekte mit langen, durchgängigen Fasern herzustellen, die über besonders hohe Strukturfestigkeiten verfügen.

Bekannt sind Fertigungstechnologien, die einen die Außenkontur eines herzustellenden Objektes repräsentierenden leichten Schaumkern verwenden, der lediglich der Formgebung dient und mit Gewebelagen umhüllt wird, die zur Realisierung einer belastbaren Hohlschale mit einem selbst aushärtenden Bindemittel, vorzugsweise mit EP-Harz, getränkt werden. Zwar eignet sich diese Herstellungsvariante durchaus zufrieden stellend für eine Vielzahl von Objekten, gleichwohl ist die Qualität in Bezug auf die Reproduzierbarkeit durch den großen manuellen Arbeitsanteil stark begrenzt. Zudem treten Formtoleranzschwankungen auf, die nicht zuletzt auch durch den Einsatz unterschiedlicher Bindemittelgehalte sowie der nur ungenauen Positionierung einzelner Gewebelagen bedingt sind.

Gilt es Leichtbaustrukturen von größerer Dimension und/oder komplexeren Aufbaus herzustellen, und dies in größeren Stückzahlen, so werden zunächst einzelne Gehäuseabschnitte in Formen laminiert und im Weiteren zu einem Gesamtleichtbauteil zusammengesetzt. Für die Ausbildung von Hohlformen werden als Stützstrukturen selbst expandierende Schäume oder aufblasbare Schläuche eingesetzt, letztere können nach Erreichen eines erforderlichen Härtegrades der mit Bindemitteln durchtränkten, auf den Stützstrukturen aufliegenden Gewebelagen entfernt und wieder verwendet werden. Nachteilhaft bei einem derartigen modularen Auf- und Zusammenbau einer komplexen Leichtbaustruktur sind die unvermeidbaren Trennfugen bzw. Verbindungsbereiche zwischen zwischen den einzelnen modular vorgefertigten Gehäuseabschnitten, über die trotz fester Fügeverbindung mittels geeigneter Bindemittel keine durchgehenden Faserstränge verlaufen.

### Darstellung der Erfindung

Der Erfindung liegt die Aufgabe zugrunde, ein Verfahren zum Herstellen eines dreidimensionalen Objektes unter Verwendung eines generativen Herstellungsprozesses nach dem LOM-Verfahren derart weiterzubilden, dass die Herstellung von höchst beanspruchbaren Leichtbaukonstruktionen unter Verwendung an sich bekannter Komposit-Baustoffe im industriellen Maßstab ermöglicht wird. Insbesondere gilt es, nach Verfahrenstechniken zu suchen, mit denen es möglich sein soll, faserverstärkte Kompositleichtbaustrukturen herzustellen, deren Strukturstabilität vergleichbar ist mit Leichtbaustrukturen, in denen durchgängige Gewebestrukturen eingearbeitet sind. Das Verfahren sollte automatisch ohne die Notwendigkeit manueller Unterstützung durchführbar sein.

Die Lösung der der Erfindung zugrunde liegenden Aufgabe ist im Anspruch 1 angegeben. Die das lösungsgemäße Verfahren in vorteilhafter Weise weiterbildenden Merkmale sind in den Unteransprüchen sowie der weiteren Beschreibung, insbesondere unter Bezugnahme auf die illustrierten Ausführungsbeispiele zu entnehmen.

Das lösungsgemäße Verfahren nutzt das an sich bekannte generative Herstellungsprinzip des "Laminated Object Modeling", kurz LOM-Verfahren, bei dem anstelle von bis anhin verwendeten Folien- oder Papierschichten zur Ausbildung eines das Objekt darstellenden Schichtverbundstapels Flächenmaterialabschnitte verwendet und bereitgestellt werden, die zumindest über Faseranteile verfügen, von denen wenigstens ein Anteil in Form von freien Faserenden und/oder Faserschlaufen die dem Flächenmaterialabschnitt zuordenbaren Flächenmaterialoberflächen wenigstens um die Hälfte der Dicke d eines Flächenmaterialabschnittes überragt.
In besonderer Weise bieten sich für derartige Flächenmaterialabschnitte, die entweder vereinzelt, d.h. stückweise bevorratet, oder aber auch in Form von band- oder lagenförmiger Meterware vorliegen können, dünne, aus Kohle- oder Glasfaser geflochtene Gewebematten an, die jedoch im Gegensatz zu konventionellen Fasergewebematten, die über weitgehend glatt geflochtene Mattenober- und - unterseite verfügen, über die jeweils obere und untere Mattenoberfläche frei abstehende Faserenden und/oder Faserschlaufen aufweisen, vergleichbar mit der Oberflächenbeschaffenheit eines Frottee-Stoffes.

Auch eignen sich Fasermaterialabschnitte mit den vorstehend bezeichneten frei abstehende Faserenden und/oder Faserschlaufen, die jedoch über eine grobmaschige Web- oder Flechtstruktur verfügen und somit eine große Maschenweite aufweisen, durch die die Faserenden und/oder Faserschlaufen der unmittelbar benachbart anliegenden Fasermaterialabschnitte, die gleichsam groß- bzw. grobmaschig ausgebildet sind, hindurchragen. Auf diese Weise können die Faserenden bzw. Faserschlaufen zur Ausbildung eines willkürlichen Geflechtes in senkrechter Orientierung zur Ebene der einzelnen Fasermaterialabschnitte beitragen und den Zusammenhalt zwischen den einzelnen Faserschichten weiter verbessern.

Werden in einem nächsten Verfahrensschritt zwei derartige, jeweils über eine Frottetuchstruktur verfügende Flächenmaterialabschnitte übereinander gelegt, so gelangen die über die jeweiligen Flächenmaterialoberflächen emporragenden Faseranteile beider Flächenmaterialabschnitte in gegenseitige Überlappung. Zwar kann auf diese Weise kein einstückiger Faserverbund zwischen den jeweils über den Flächenmaterialoberflächen überragenden Faseranteilen hergestellt werden, gleichwohl wird durch die Zugabe eines Haftvermittlers, vorzugsweise in Form eines selbst härtenden Bindemittels, eine sehr viel bessere, d.h. robustere faserverstärkte Fügeverbindung zwischen beiden Flächenmaterialabschnitten erzielt, als es mit bisher üblichen Verfahrenstandards möglich ist, mit denen der Haftverbund zwischen zwei unmittelbar aufeinander liegenden Fasergewebematten ausschließlich auf durch das eingesetzte Bindemittel beruhenden Adhäsionskräften basiert. Die Länge des Faserüberstandes über die Flächenmaterialoberflächen eines jeweiligen Flächenmaterialabschnittes sollte wenigstens der Hälfte der Dicke des jeweiligen Flächenmaterialabschnittes entsprechen. Eine verfahrenstechnisch vernünftige Obergrenze für die Länge des Faserüberstandes hängt von mehreren Aspekten ab, wie bspw. Fasermaterial, Gewebebeschaffenheit etc., sie sollte jedoch das Dreifache der Dicke des jeweiligen Flächenmaterialabschnitts nicht überschreiten. Als Dicke des Flächenmaterialabschnitts wird an dieser Stelle der Abstand beider Flächenmaterialoberflächen verstanden, über die die Faserenden bzw. Faserschlaufen überstehen.

Alternativ zu den vorstehend erläuterten Fasergewebematten bieten sich als Flächenmaterialabschnitte ebenso Kunststoff-Folien an, in denen zusätzliche Faseranteile eingearbeitet sind, von denen ein Teil die Folienoberflächen überragt. Die in der Kunststoff-Folien-Matrix eingebetteten Fasern überragen mit einer möglichst homogenen Flächenverteilung die Folienoberflächen in Form frei endender Faserenden oder wie bereits erwähnt, in Schlingenform. Insbesondere gilt es bei einer derartigen Ausführungsform dafür Sorge zu tragen, dass die über die Folienoberflächen hinausragenden Fasern in einem festen Verbund mit der Folienmatrix stehen.

Das lösungsgemäße Verfahren soll im Weiteren unter Bezugnahme auf ein illustriertes bevorzugtes Ausführungsbeispiel näher erläutert werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematische Querschnittsdarstellung eines Flächenmaterialabschnittes sowie
- Fig. 2a, b: schematische Darstellung der für die Durchführung des lösungsgemäßen Verfahrens erforderlichen Komponenten.

### Wege zur Ausführung der Erfindung, gewerbliche Verwendbarkeit

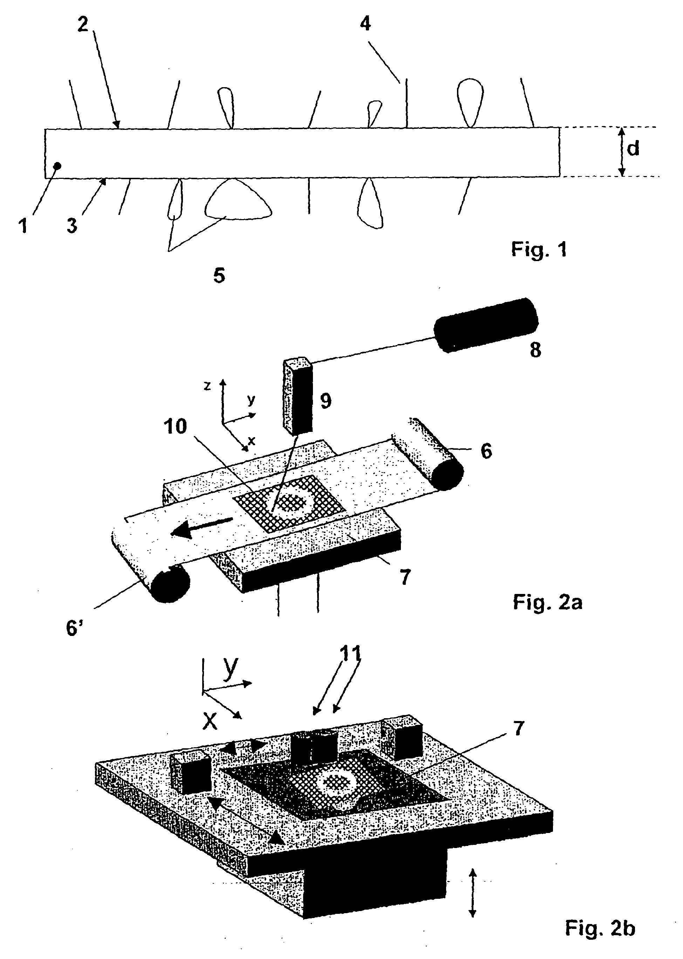

In Fig. 1 ist der schematische Querschnitt eines Flächenmaterialabschnittes 1 illustriert, der im lösungsgemäßen Verfahren zum Einsatz kommt. Der Flächenmaterialabschnitt 1 wird von einer oberen und unteren Flächenmaterialoberfläche begrenzt und weist eine Schichtdicke d auf. Über die Flächenmaterialoberflächen 2, 3 ragen Faserbestandteile in Form frei endender Faserenden 4 und/oder in Form von Faserschlingen 5. Die Länge der jeweils die Flächenmaterialoberflächen 2, 3 überragenden Faseranteile 4, 5 entspricht wenigstens der Hälfte der Schichtdicke d. In einer ersten bevorzugten Ausführungsform besteht der Flächenmaterialabschnitt 1 aus einem Fasergeflecht in Form einer Fasergewebematte, die aus Glas- oder Kohlefasern gewoben ist. Zur Herstellung der die Flächenmaterialoberflächen 1, 2 überragenden Faserbestandteile können entweder konventionell hergestellte Fasergewebematten einer entsprechenden Nachbehandlung unterzogen werden, beispielsweise mit Hilfe geeigneter Nadelwalzenanordnungen, durch die lokale Faserabschnitte aus der gewobenen Flechtstruktur senkrecht zur Gewebefläche durch Zug- oder Druckkräfte gezogen bzw. verdrängt werden. Auch ist es vorstellbar, derartige Faserflächenmaterialabschnitte bereits während des Webvorganges entsprechend auszubilden, vergleichbar jener Vorgehensweise, mit der Frottee-Stoffe hergestellt werden.

Anstelle von Fasergeweben könnten ebenso vorzugsweise aus Kunststoff gefertigte Folien eingesetzt werden, in die Faserbestandteile eingearbeitet sind, die in der in Fig. 1 illustrierten Form über die jeweiligen Folienoberflächen 2, 3 emporragen. Derartige Kunststoff-Faser-Hybridfolien lassen sich im Wege üblicher. Extrudiertechniken realisieren.

In Fig. 2a ist eine Anordnung zur Durchführung eines LOM-Verfahrens dargestellt. Hierbei sei angenommen, dass das vorstehend beschriebene, vorkonfektionierte Flächenmaterial bandförmig als Meterware in Form einer Materialreservoir-Rolle 6 bevorratet ist. Das bandförmige, von der Materialreservoir-Rolle 6 abwickelbare Flächenmaterial gelangt auf eine vertikal absenkbare Bauplattform 7, auf der in schichtweiser Abfolge das jeweils dreidimensional herzustellende Objekt entsteht. In Figur 2 b ist eine Detailansicht der Bauplattform dargestellt. Mit Hilfe einer Schneideeinrichtung, die in dem gezeigten Ausführungsbeispiel gemäß Fig. 2a aus einem Laser 8 und einer zugehörigen optischen Strahlumlenkeinheit 9 besteht, werden die Umrisslinien eines jeweiligen auf im Bereich der Bauplattform 7 abgelegten Flächenmaterialabschnittes 10 aus der bandförmigen Meterware ausgeschnitten. Die geometrischen Vorgaben zur Strahlführung des Laserstrahls erfolgt unter Zugrundelegung der jeweiligen Querschnittskontur des herzustellenden Objektes, die als Datensatz, vorzugsweise im sogenannten STL-Format, in einem die Schneidevorrichtung ansteuernden nicht in den Figuren dargestellten Steuerrechner vorliegt. Das Restmaterial, das nicht auf der Bauplattform 7 zum schichtförmigen Aufbau eines Objektes benötigt wird, wird als Abfall 6' aufgewickelt und entsprechend entsorgt.

Alternativ zu der in Fig. 2a illustrierten Vorgehensweise ist es gleichsam möglich, die einzelnen Flächenmaterialabschnitte mit Hilfe geeigneter Schneidwerkzeuge, wie beispielsweise Messer, Heißdraht, Wasserstrahl, oder wie im gezeigten Beispiel in Fig. 2a mit Hilfe eines Lasers, vor dem Ablegen auf die Bauplattform entsprechend zuzuschneiden und mit Hilfe eines Handhabungswerkzeuges, wie beispielsweise eines Roboters oder eines Vakuum-Greifers, lagerichtig auf die vertikal absenkbare Bauplattform zu platzieren.

Im Anschluss an den Ablegevorgang erfolgt der Auftrag eines Bindemittels auf die Oberfläche des jeweils zuoberst auf der Bauplattform 7 aufliegenden Flächenmaterialabschnittes 10, vorzugsweise unter Einsatz wenigstens eines so genannten Ink-Jet-Druckkopfes 11 (siehe Figur 2b), aus dem ein selbst härtendes Bindemittel an geeignete Oberflächenbereiche des Flächenmaterialabschnittes deponiert wird. Häufig werden zwei oder mehr Materialien für den Auftrag eines entsprechenden, aus mehreren Komponenten zusammengesetzten Bindemittels aufgetragen, die aus jeweils unterschiedlichen Druckköpfen ausgetragen werden.

Gilt es, bestimmte Oberflächenbereiche des auf der Bauplattform 7 aufliegenden Flächenmaterialabschnittes 9 nicht mit weiteren Flächenmaterialabschnitten zu verbinden, so können diese Oberflächenbereiche entsprechend mit einer folienartigen Stützstruktur abgedeckt oder mit einer mittels Ink-Jet-Druckkopf ausbringbaren Materialzusammensetzung überdeckt werden. Als bevorzugte Stützstruktur-Materialien dienen wachsartige Substanzen, die in einem späteren Arbeitsschritt chemisch oder thermisch aus dem Schichtverbundstapel ausgelöst werden können.

Zum schichtweisen Aufbau eines dreidimensionalen Objektes mit Hilfe des LOM-Verfahrens wird lagenweise eine Vielzahl einzelner Flächenmaterialabschnitte 10 auf jeweils auf der vertikal absenkbaren Bauplattform 7 aufliegenden, jeweils mit Bindemittel sowie gegebenenfalls wachsartigen Stützstrukturen versehenen Flächenmaterialabschnitten 10 abgelegt, wobei nach Ablegen eines Flächenmaterialabschnitt ein Anpressvorgang durchgeführt, vorzugsweise mit Hilfe einer Anpresswalze, die in geeigneter Form über den Schichtverbundstapel geführt wird. Auf diese Weise gelangen die jeweils über die Flächenmaterialoberflächen erhabenen Faseranteile in gegenseitige Überlappung und tragen somit für eine erhöhte Belastbarkeit und Steifigkeit des Gesamtstapelverbundes bei. In besonders vorteilhafter Weise kann der Anpressvorgang durch zusätzliches Einleiten von Vibrationen unterstützt werden, beispielsweise durch Einleitung von Ultraschallwellen, wodurch der Vorgang gegenseitiger Überlappung der jeweiligen Faserbestandteile unterstützt werden kann.

Ferner bietet es sich in vorteilhafter Weise an, die zu Zwecken eines Anpressdruckes über den Schichtstapelverbund zu führende Walze mit geeigneten Dornen bzw. Nadeln zu versehen, durch die die jeweils überstehenden Faseranteile 4, 5 senkrecht zur jeweiligen Flächenmaterialoberfläche ausgerichtet und zusätzliche gelängt werden. So können die jeweils überstehenden Schlaufen 5 sowie die frei endenden Faserenden 4 in Stapelrichtung weiter nach unten durchgedrückt oder mit Hilfe geeigneter an der Walze angebrachter Häkelnadeln relativ zur Oberfläche des jeweiligen Flächenmaterialabschnittes nach oben gezogen werden.

Sind sämtliche Schichten für die Herstellung eines dreidimensionalen Objektes auf der Bauplattform in der vorstehenden Weise abgelegt und miteinander verklebt, so wird der Gesamtstapelverbund vorzugsweise einer Wärmebehandlung unterzogen, bei der die auf Wachsbasis beruhenden Support-Strukturen ausgewaschen werden. Mit Hilfe eines derartigen Verfahrens ist die Herstellung komplizierter und detailreicher 3D-Geometrien möglich, insbesondere auch die Realisierung von beliebigen Freiformflächen mit und ohne Hinterschnitten.

### Bezugszeichenliste

- 1: Flächenmaterialabschnitt
- 2,3: Flächenmaterialoberflächen
- 4: Freie Faserenden
- 5: Faserschlaufen
- 6: Materialreservoir-Rolle
- 7: Vertikal absenkbare Bauplattform
- 8: Laser
- 9: Optische Umlenkeinheit
- 10: Flächenmaterialabschnitt
- 11: Ink-Jet-Druckkopf

## Patentansprüche

1. Verfahren zum Herstellen eines dreidimensionalen Objektes im Wege eines generativen Herstellungsprozesses nach dem LOM-Verfahren, Laminated Object Manufacturing, bei dem das Objekt durch wiederholtes, lagenweises flächiges Übereinanderfügen einer Vielzahl einzelner Flächenmaterialabschnitte (1) in Form eines sich dabei ausbildenden, dreidimensionalen Schichtverbundstapels erhalten wird,
**gekennzeichnet durch** folgende Verfahrensschritte:
- Bereitstellen von Flächenmaterialabschnitten (1), die zumindest Faseranteile enthalten, von denen wenigstens ein Anteil in Form von freien Faserenden (4) und/oder Faserschlaufen (5) die dem Flächenmaterialabschnitt (1) zuordenbaren Flächenmaterialoberflächen (2, 3) wenigstens um die Hälfte der Dicke d eines Flächenmaterialabschnittes (1) überragt ,
- Ablegen eines zweiten oder weiteren Flächenmaterialabschnittes (1) auf einen bereits auf einer Bauplattform aufgebrachten Flächenmaterialabschnitt (1) derart, dass die über die Flächenmaterialoberflächen (2, 3) emporragenden Faseranteile der einander zugewandt orientierten Flächenmaterialoberflächen (2, 3) beider Flächenmaterialabschnitte (1) in gegenseitige Überlappung gebracht werden,
- Zugeben eines Haftvermittlers zumindest in Teilbereichen zwischen den in gegenseitige Überlappung gebrachten Faseranteilen (4) beider Flächenmaterialabschnitte (1), und
- Wiederholen der vorstehenden Verfahrensschritte zum Erhalt des Objektes.

2. Verfahren nach Anspruch 1,
**dadurch gekennzeichnet, dass** die Flächenmaterialabschnitte (1) in Form eines bandförmig ausgebildeten Fasergewebes oder in Form einer Vielzahl von Fasergewebematten bevorratet werden, und
dass das Fasergewebe oder die Fasergewebematten derart vorkonfektioniert wird bzw. werden, dass Faseranteile die Fasermaterialoberflächen der Flächenmaterialabschnitte (10) in Form von freien Faserenden (4) und/oder Faserschlaufen (5) überragen.

3. Verfahren nach Anspruch 1,
**dadurch gekennzeichnet, dass** die Flächenmaterialabschnitte (1) in Form einer bandförmig ausgebildeten Folie mit Faserbestandteilen oder in Form einer Vielzahl von Folienabschnitten mit Faserbestandteilen bevorratet werden, und
dass die Folie derart vorkonfektioniert wird, dass Faseranteile die Folienoberfläche in Form von freien Faserenden (4) und/oder Faserschlaufen (5) überragen.

4. Verfahren nach einem der Ansprüche 1 bis 3,
**dadurch gekennzeichnet, dass** die Faserenden (4) und/oder Faserschlaufen (5) die Fasermaterialoberflächen maximal um das Dreifache der Dicke d eines Flächenmatertialabschnittes (1) überragen.

5. Verfahren nach einem der Ansprüche 1 bis 4,
**dadurch gekennzeichnet, dass** während oder nach dem Ablegen des zweiten oder weiteren Flächenmaterialabschnittes (1), dieser druckbeaufschlagt auf den bereits auf der Bauplattform aufgebrachten Flächenmaterialabschnitt (1) verpresst wird.

6. Verfahren nach Anspruch 5,
**dadurch gekennzeichnet, dass** das Verpressen unter Einleitung von Vibrationen erfolgt.

7. Verfahren nach einem der Ansprüche 1 bis 6,
**dadurch gekennzeichnet, dass** vor oder nach dem Ablegen des zweiten oder weiteren Flächenmaterialabschnittes (1) auf den bereits auf der Bauplattform aufgebrachten Flächenmaterialabschnitt der Flächenmaterialabschnitt mit einer Schneideeinheit unter Vorgabe einer Querschnittsform des Objektes zugeschnitten wird.

8. Verfahren nach einem der Ansprüche 1 bis 7,
**dadurch gekennzeichnet, dass** das Zugeben des Haftvermittlers zwischen den in gegenseitige Überlappung gebrachten Faseranteilen mittels Drucktechnik (11) erfolgt.

9. Verfahren nach einem der Ansprüche 1 bis 8,
**dadurch gekennzeichnet, dass** nach dem Ablegen des zweiten oder weiteren Flächenmaterialabschnittes (1) zumindest in einem Flächenteilbereich des Flächenmaterialabschnittes (1) eine Stützmaterialschicht aufgebracht wird, die eine Schichtdicke aufweist, die der Schichtdicke des Flächenmaterialabschnittes (1) entspricht.

10. Verfahren nach Anspruch 9,
**dadurch gekennzeichnet, dass** als Stützmaterial ein Wachs oder ein wachsartiges Material mittels Drucktechnik oder in Folienform aufgebracht wird.

11. Verfahren nach einem der Ansprüche 5 bis 10,
**dadurch gekennzeichnet, dass** während oder nach dem Verpressen die über die Flächenmaterialoberflächen (2, 3) emporragenden Faseranteile mittels eines Nadelwerkzeuges orthogonal zur Flächenmaterialoberfläche zur Vergrößerung des Faserüberstandes behandelt werden.

12. Verfahren nach einem der Ansprüche 1 bis 11,
**dadurch gekennzeichnet, dass** die über Faseranteile verfügenden Flächenmaterialabschnitte in Form von Glasfaser-, Kohlefaser- oder Kunststofffasergewebematten bereitgestellt werden.

13. Verfahren nach einem der Ansprüche 2 bis 12,
**dadurch gekennzeichnet, dass** die als Fasergewebe oder Fasergewebematten ausgebildeten Flächenmaterialabschnitte (1) eine Gewebemaschenweite aufweisen, so dass die über die Flächenmaterialoberflächen (2, 3) emporragenden Faseranteile durch die Gewebemaschen von zumindest zwei unmittelbar aufeinander liegenden Flächenmaterialabschnitte hindurchragen.

## Claims

1. A method for the manufacture of a three-dimensional object in the way of a generative manufacturing process in accordance with the LOM (Laminated Object manufacturing) method, in which the object is obtained by the repeated joining in flat layers one above the other of a multiplicity of individual sheet material sections (1) in the form of a three-dimensional bonded layer stack that thereby develops,
**characterised by** the following steps of the method:
- preparation of sheet material sections (1), which at least include fibrous content, of which at least one part is in the form of free fibre ends (4) and/or fibre loops (5), which project beyond the sheet material surfaces (2, 3) assignable to the sheet material section (1) by at least half the thickness d of a sheet material section (1),
- deposition of a second or further sheet material section (1) onto a sheet material section (1) already applied on to a building platform, such that the fibrous content projecting over the sheet material surfaces (2, 3) of the sheet material surfaces (2, 3) of both sheet material sections (1) that are oriented facing one another is brought into a mutual overlap,
- addition of a bonding agent, at least in subregions between the fibrous content (4) of the two sheet material sections (1) that is brought into a mutual overlap, and
- repetition of the above steps of the method so as to obtain the object.

2. The method in accordance with Claim 1,
**characterised in that** the sheet material sections (1) are stored in the form of a fibre weave designed in the form of a ribbon, or in the form of a multiplicity of fibre weave mats, and
**in that** the fibre weave, or the fibre weave mats, is/are pre-assembled such that the fibrous content projects beyond the fibrous material surfaces of the sheet material sections (10) in the form of free fibre ends (4) and/or fibre loops (5).

3. The method in accordance with Claim 1,
**characterised in that**
the sheet material sections (1) are stored in the form of a film designed in the form of a ribbon, or in the form of a multiplicity of film sections with fibrous components, and
**in that** the film is pre-assembled such that the fibrous content projects beyond the film surface in the form of free fibre ends (4) and/or fibre loops (5).

4. The method in accordance with one of the Claims 1 to 3,
**characterised in that** the fibre ends (4) and/or fibre loops (5) project beyond the fibrous material surfaces by a maximum of three times the thickness d of a sheet material section (1).

5. The method in accordance with one of the Claims 1 to 4,
**characterised in that** during or after the deposition of the second or further sheet material section (1), the latter, by the application of pressure, is pressed onto the sheet material section (1) already applied onto the building platform.

6. The method in accordance with Claim 5,
**characterised in that** the application of pressure takes place together with the introduction of vibrations.

7. The method in accordance with one of the Claims 1 to 6,
**characterised in that** during or after the deposition of the second or further sheet material section (1) onto the sheet material section already applied onto the building platform the sheet material section is cut to size with a cutting unit, with the specification of a cross-sectional shape of the object.

8. The method in accordance with one of the Claims 1 to 7,
**characterised in that** addition of the bonding agent between the fibrous content applied in a mutual overlap takes place by means of printing technology (11) .

9. The method in accordance with one of the Claims 1 to 8,
**characterised in that** after the deposition of the second or further sheet material section (1) a supporting material layer is applied in at least a sub-region of the sheet material section (1); the supporting material layer has a thickness that corresponds to the layer thickness of the sheet material section (1).

10. The method in accordance with Claim 9,
**characterised in that** as the supporting material a wax, or a wax-like material, is applied by means of printing technology, or in the form of a film.

11. The method in accordance with one of the Claims 5 to 10,
**characterised in that** during or after the application of pressure the fibrous content projecting over the sheet material surfaces (2, 3) is treated by means of a needle tool orthogonal to the sheet material surface for purposes of increasing the fibrous protrusion.

12. The method in accordance with one of the Claims 1 to 11,
**characterised in that** the sheet material sections featuring the fibrous content are prepared in the form of glass fibre, carbon fibre, or plastic fibre weave mats.

13. The method in accordance with one of the Claims 2 to 12,
**characterised in that** the sheet material sections (1) designed as a fibre weave, or fibre weave mats, have a weave mesh size such that the fibrous content projecting over the sheet material surfaces (2, 3) penetrates through the weave meshes of at least two sheet material sections located one directly upon another.

## Revendications

1. Procédé de fabrication d'un objet tridimensionnel au moyen d'un processus de fabrication génératif suivant le procédé LOM (Fabrication d'objet laminé), dans lequel l'objet est obtenu par superposition surfacique répétée en couches d'une multitude de sections de matériaux surfacique distinctes (1) sous forme d'un empilement de couches composite tridimensionnel se formant alors,
**caractérisé par** les étapes opératoires suivantes :
- préparation de sections de matériau surfaciques (1) qui contiennent au moins des parties fibreuses dont au moins une partie dépasse sous forme d'extrémités fibreuses libres (4) et/ou de boucles fibreuses (5) des surfaces de matériau surfacique (2, 3) pouvant être associées à la section de matériau surfacique (1) à raison d'au moins la moitié de l'épaisseur d d'une section de matériau surfacique (1),
- dépôt d'une deuxième ou d'autres sections de matériau surfaciques (1) sur une section de matériau surfacique (1) déjà appliquée sur une plateforme de construction de manière à ce que les parties fibreuses dépassant des surfaces de matériau surfacique (2, 3) des deux sections de matériau surfaciques (2, 3) orientées les unes vers les autres des deux sections de matériau surfaciques (1) soient amenées en chevauchement réciproque,
- ajout d'un promoteur d'adhérence au moins dans des zones partielles entre les parties fibreuses (4) amenées en chevauchement réciproque des deux sections de matériau surfaciques (1) et
- répétition des étapes opératoires précédentes pour obtenir l'objet.

2. Procédé selon la revendication 1,
**caractérisé en ce que** les sections de matériau surfaciques (1) sont stockées sous forme d'un textile fibreux réalisé en forme de bande ou sous forme d'une multitude de nappes de textile fibreux et
que le textile fibreux ou les nappes de textile fibreux est ou sont préconfectionnés de manière à ce que les parties fibreuses dépassent des surfaces de matériau surfacique des sections de matériau surfaciques (10) sous forme d'extrémités fibreuses (4) et/ou de boucles fibreuses (5) libres.

3. Procédé selon la revendication 1,
**caractérisé en ce que** les sections de matériau surfaciques (1) sont stockées sous forme d'un film réalisé en forme de bande ou sous forme d'une multitude de sections de film contenant des composants fibreux et
que le film est préconfectionné de manière à ce que les parties fibreuses de la surface du film dépassent sous forme d'extrémités fibreuses (4) et/ou de boucles fibreuses (5) libres.

4. Procédé selon une des revendications 1 à 3,
**caractérisé en ce que** les extrémités fibreuses (4) et/ou boucles fibreuses (5) dépassent des surfaces de matériau surfaciques au maximum de trois fois l'épaisseur d d'une section de matériau surfacique (1).

5. Procédé selon une des revendications 1 à 4,
**caractérisé en ce que**, pendant ou après le dépôt de la deuxième ou des autres sections de matériau surfaciques (1), celle-ci est comprimée sous pression sur la section de matériau surfacique (1) déjà appliquée sur la plateforme de construction.

6. Procédé selon la revendication 5,
**caractérisé en ce que** la compression a lieu en introduisant des vibrations.

7. Procédé selon une des revendications 1 à 6,
**caractérisé en ce que**, pendant ou après le dépôt de la deuxième ou des autres sections de matériau surfaciques (1) sur la section de matériau surfacique déjà appliquée sur la plateforme de construction, la section de matériau surfacique est découpée à l'aide d'une unité de coupe en prédéfinissant une forme de section transversale de l'objet.

8. Procédé selon une des revendications 1 à 7,
**caractérisé en ce que** l'ajout du promoteur d'adhérence entre les parties fibreuses amenées en chevauchement réciproque a lieu par technique de pression (11).

9. Procédé selon une des revendications 1 à 8,
**caractérisé en ce que**, après le dépôt de la deuxième ou des autres sections de matériau surfaciques (1) dans au moins dans une zone surfacique partielle de la section de matériau surfacique (1), on applique une couche de matériau support qui présente une épaisseur de couche équivalant à l'épaisseur de couche de la section de matériau surfacique (1).

10. Procédé selon la revendication 9,
**caractérisé en ce qu'**on applique en tant que matériau support une cire ou un matériau de type cire par technique de pression ou sous forme de film.

11. Procédé selon une des revendications 5 à 10,
**caractérisé en ce que**, pendant ou après la compression, les parties fibreuses dépassant des surfaces de matériau surfacique (2, 3) sont traitées orthogonalement par rapport à la surface de matériau surfacique au moyen d'un outil d'aiguilletage pour augmenter la saillie des fibres.

12. Procédé selon une des revendications 1 à 11,
**caractérisé en ce que** les sections de matériau surfaciques disposant des parties fibreuses sont élaborées sous forme de nappes de fibres de verre, fibres de carbone ou fibres de plastique.

13. Procédé selon une des revendications 2 à 12,
**caractérisé en ce que** les sections de matériau surfaciques (1) réalisées sous forme de textile fibreux ou de nappes de textile fibreux présentent un maillage de textile fibreux tel que les parties fibreuses dépassant des surfaces de matériau surfacique (2, 3) dépassent des mailles du textile à raison d'au moins deux sections de matériau surfaciques immédiatement superposées.
